# EUROPEAN PATENT SPECIFICATION

(11) **EP 4 602 591 B1**
(45) Date of publication and mention of the grant of the patent: **02.12.2026**
(21) Application number: 23787207.2
(22) Date of filing: 09.10.2023
(51) Int. Cl.: G10L 25/51, G06F 40/30, G09B 19/04, G09B 5/06, G10L 25/63, G06V 40/20, G06V 40/16, G06V 40/18

(54) **ASSISTING A SPEAKER DURING TRAINING OR ACTUAL PERFORMANCE OF A SPEECH**
UNTERSTÜTZUNG EINES SPRECHERS WÄHREND DES TRAININGS ODER DER TATSÄCHLICHEN AUSFÜHRUNG EINER SPRACHE
ASSISTANCE POUR CONFÉRENCIER PENDANT LA PRATIQUE OU LA PRÉSENTATION RÉELLE D'UNE CONFÉRENCE

(30) Priority: 10.10.2022 CH 11912022
(43) Date of publication of application: 20.08.2025
(73) Proprietor: Talk Sàrl, 1350 Orbe (CH)
(72) Inventor: VUARRAZ, Laurent, 1350 Orbe (CH)
(74) Representative: P&TS SA (AG, Ltd.)
(86) International application number: PCT/IB2023/060124
(87) International publication number: WO 2024/079605

(56) References cited:
- WO-A1-2008/085436
- WO-A1-2016/024914
- WO-A1-2019/217128
- WO-A2-03/065349
- WO-A2-2008/073850
- US-A1- 2016 049 094

## Description

### Field of the invention

The present invention relates to computing device implemented methods, systems and computer programs to collect and analyze data related to a speech and to assist speakers during preparation and/or training or actual performance of a speech.

### Prior art

Many people have anxieties about speaking in front of an audience. Moreover, many speakers face difficulties in delivering a speech in a clear, understandable and convincing manner.

Like most skills, preparing and performing a speech can be trained. While human coaches offer different speech performance and pitch training, we more recently observed the development of different computer-implemented methods and systems for assisting speakers during training and actual performance of a speech.

US2021358476 discloses systems and methods for detection of monotone speech, based on extraction and clusterisation of pitch values. The speech is classified as monotone or non-monotone and a feedback is given to the user upon completion of the audio session.

US2006106611 describes devices and methods for automatically analyzing a user's verbal presentation and providing feedback to the user, in real-time or off-line, to make the user aware of improper speech habits.

US2003202007 discloses another system and method for providing evaluation feedback to a speaker while giving a real-time oral presentation.

TW445751 discloses a method and system for detecting an implicit audience feedback, and delivering this feedback to a presentation controller.

US2014356822 discloses a method and apparatus for presenting an audiovisual display of an animated character to a human user during a conversational period of a coaching session. After the conversational period, the display screen and speakers display feedback to the user regarding the user's behavior. For example, the feedback may include a plot of the user's smiles over time, or information regarding prosody of the user's speech.

US2011082698 discloses devices, methods and systems for improving and adjusting voice volume and body movements during a performance. Device embodiments may be configured with a processor, microphone, one or more movement sensors and at least a display or a speaker. The processor may include instructions configured to receive at least one of sound input from the microphone and movement data from the one or more accelerometers, generate one or more input levels corresponding to at least one of the sound input and movement data, compare the one or more generated input levels to one or more predefined input levels, associate the one or more predefined input levels with at least one of a color, text, graphic or audio file and present at least one of the color, text, graphic or audio file to a user of the device.

US2017169727 discloses techniques to collect data and to provide real-time feedback to an orator about his/her performance and/or audience interaction. The method includes the steps of: collecting real-time data from the speaker during the presentation, wherein the data is collected via a mobile device worn by the speaker; analyzing the real-time data collected from the speaker to determine whether corrective action is needed to improve performance; and generating a real-time alert to the speaker suggesting the corrective action if the real-time data indicates that corrective action is needed to improve performance.

US2011282669 discloses a method for identifying the style of a speaking participant notably the accent, but also one or more of pronunciation accuracy, speed, pitch, cadence, intonation, co-articulation, syllable emphasis, and syllable duration.

US2021065582 discloses a method for speech rehearsal during a presentation, including receiving audio data from a speech rehearsal session over a network, receiving a transcript for the audio data, the transcript including a plurality of words spoken during the speech rehearsal session, calculating a real time speaking rate for the speech rehearsal session, determining if the speaking rate is within a threshold range, detecting utterance of a filler phrase or sound during the speech rehearsal session using at least in part a machine learning model trained for identifying filler phrases and sounds in a text, and upon determining the speaking rate falls outside the threshold range or detecting the utterance of the filler phrase or sound, enabling real time display of a notification on a display device.

US2018350389 discloses a method for providing a computer-generated feedback directed to whether user speech input meets subjective criteria is provided through the evaluation of multiple speaking traits. Such multiple speaking traits include vocal fry, tag questions, uptalk, filler sounds and hedge words. Audio constructs indicative of individual instances of speaking traits are isolated and identified from appropriate samples.

US9792908 discloses a method for analyzing the speech delivery of a user including presenting to the user a plurality of speech delivery analysis criteria, receiving from the user a selection of at least one of the speech delivery analysis criterion, receiving, from at least one sensing device, speech data captured by the at least one sensing device during the delivery of a speech by the user, transmitting the speech data and the selected at least one speech delivery analysis criterion to an analysis engine for analysis based on the selected at least one speech delivery analysis criteria, receiving, from the analysis engine an analysis report for the speech data, the analysis report comprising an analysis of the speech data performed by the analysis engine based on the selected at least one criterion, and presenting to the user the analysis report.

US2009089062 discloses a public speaking self-evaluation tool that helps a user practice public speaking in terms of avoiding undesirable words or sounds, maintaining a desirable speech rhythm, and ensuring that the user is regularly glancing at the audience. The system provides a user interface through which the user can define the undesirable words or sounds that are to be avoided, as well as a maximum frequency of occurrence threshold to be used for providing warning signals based on detection of such filler or undesirable words or sounds. The user interface allows a user to define a speech rhythm, e.g. in terms of spoken syllables per minute, that is another maximum threshold for providing a visual warning indication.

US2014302469 discloses systems and methods for providing a multi-modal evaluation of a presentation. The system includes a motion capture device configured to detect motion of an examinee giving a presentation and an audio recording device configured to capture audio of the examinee giving the presentation.

US10176365 discloses systems and methods for multi-modal performance scoring using time-series features.

JP2018180503 discloses a public speaking assistance device and program, which allow a learner to learn which way the learner should face next while practicing public speaking.

US2012042274 discloses a method of and system for evaluating and annotating live or prerecorded activities, such as live or prerecorded public speaking.

US2021097887 discloses a method, computer program product, and computer system for public speaking guidance is provided. A processor retrieves speaker data regarding a speech made by a user. A processor separates the speaker data into one or more speaker modalities. A processor extracts one or more speaker features from the speaker data for the one or more speaker modalities. A processor generates a performance classification based on the one or more speaker features.

US2016049094A1 disclose a method of public speaking training comprising a step of rendering a simulated audience member on a display monitor, and animating that member in response of features extracted from an audio or video capture of the performance.

WO2008085436A1 discloses a training method providing various feedback such as heart rate, skin temperature, electro cardiogram, and so on.

This prior art recognizes that the quality of a performance can be determined from an audio recording of the performance and, in some cases, on a video recording to detect body and face movements and/or on various measurements.

It has been found however that the quality of such a performance also depends on the quality of the spoken text, and on a good match of the performance to the text. A bad speech is difficult to perform well, even by the most talented speaker. Moreover, the type of performance that works best for a give text depends on the type of text and on the context.

WO2016024914A1 and WO2008073850A2 each disclose a method of assisting in improving speech of a user, including processing both the text to be spoken and the recorded audio.

It is however technically difficult to give a speaker realistic and complete feedback on his performance in real time. The quality of the performance depends not only on the intonation and prosody of the voice, but also on a match between these parameters and the text being spoken. Moreover, different portions of the text often require different intonations; a text may include a question at the beginning, a sad passage later on, and an optimistic statement later on, for example. Detecting in real time, during the performance, the appropriate intonation for each passage, and the necessary intonation changes, requires computing power and bandwidth that is not always available in personal devices such as smartphones. The problem is even more complex if the analysis of the speaker's performance is to include an analysis of his body language, and of the adequacy between this body language, the intonation of the voice, and different passages of the text.

In a speech, some sections of a text are more important than other. A good text will therefore usually require a good density or rhythm of such important sections. A good overall performance depends heavily on the performance of the speaker during those crucial sections. A correct and quick feedback on the performance of a speaker during those crucial sections is therefore necessary during training and performance of a speech.

### Brief summary of the invention

In order to provide a better assistance to speakers during the training and actual performance of a speech, the invention is thus related to a computing device implemented method for assisting speakers during preparation and/or training or actual performance of a speech, comprising the steps of:
a) inputting a text to be spoken;
b) using a machine learning system to detect occurrences of different types of predefined linguistic constructions within said text;
c) having a processor preparing and saving a marked-up version of the text, said marked-up version including markups for marking the beginning and end of such linguistic constructions;
d) recording a performance of a speaker speaking said text;
e) detecting segments of said performance corresponding to said linguistic constructions;
f) analyzing at least the audio content of said segments, wherein analyzing comprises evaluating the speech rendering performance of said segments;
g) giving a feedback to said speaker during his performance, so as to allow him to improve or train the speech rendering performance.

The number of predefined linguistic constructions to be detected is limited, and only some portions of the text, but not the whole text, corresponds to one of those predefined linguistic constructions.

Detecting and then marking certain linguistic constructions in advance, on the basis of the text introduced beforehand, solves several technical problems.

Some linguistic constructions require a particular intonation or prosody. For example, a question requires a different intonation than a statement. Different types of questions require different intonations. A call to action again requires a different type of intonation, etc. Detecting these linguistic constructs in advance, and preparing a version of the text with markers, makes it easier and faster to analyze these critical portions of the speech in real time, and to detect consistency between the intonation of each of these passages.

This detection also allows to focus the performance analysis on certain segments corresponding to these linguistic constructs, and thus if necessary to use the necessary computational power primarily for these key segments. Therefore, the complicated task of evaluating the text and the speech rendering performance (i.e., the way the text is rendered by the speaker, possibly based on a multimodal analysis of the audio and/or video recording of the speech) could be made more efficient.

A semantic analysis of these linguistic constructions can be performed on the text. This semantic analysis allows to specify the type of intonation adapted to each segment corresponding to this linguistic construction. Detecting and marking some linguistic constructions of the text could also be used for automating the scoring of the text itself, for example to evaluate, store and display a score representative of the dramaturgical quality of the text.

WO03065349A2 is related to a text-to-speech converter, comprising a step of marking-up the text according to a phonetic markup system. The markup is intended to be used for the text-to-speech conversion, not by a speaker.

Another text-to-speech converter is disclosed in WO2019217128A1.

According to the invention, the marked-up version of the text can also be displayed to the user, during or before his performance. This provides an automatic way of converting a text which might be hard to speak, into a text enriched with automatically computed mark-ups, that will help a speaker during the preparation and actual performance. Thus, beside the text segment identification, the markups' format enables to direct speakers to train any kind of speech rendering performance that helps them to improve their communication skills, for instance the prosody, intonation, etc.

Steps a) to c) may be performed before the performance (step d), for example if the speaker or another person enters in advance a text to be analyzed and marked before the performance. This mode of implementation has the advantage of giving this person feedback on the text written before the performance, and thus giving him the opportunity to improve this text and rework it. Several successive versions of the written text can be entered and analyzed until the user is satisfied with the text and speaks it. This version also allows a written marked-up text to be prepared in advance, to help the speaker identify key passages, corresponding to predefined linguistic constructs, and thus pronounce these segments appropriately.

In another embodiment, steps a)-c) are performed during the performance (step d), based on a written text obtained by speech recognition of the spoken text and supplemented with markups (steps b) and c)) used to identify (step e) segments of the performance corresponding to predefined linguistic constructions.

Different linguistic constructions are best performed when the speaker express some specific emotions or with a specific prosody. For example, some types of linguistic constructions require expressing emotions like surprise, joy, sadness or determination for example. Detecting and marking those constructions in the text allows determining the associated expected emotion or prosody, retrieving a corresponding segment in the recorded performance, and verifying a match between the expected emotion or prosody and the actually expressed emotion or prosody retrieved from the recorded performance.

Different linguistic constructions are best performed when the speaker shows expressiveness and is intelligible. Therefore an expressiveness score during the predefined specific linguistic constructions, and/or an intelligibility score during said predefined linguistic constructions, may be computed with an learning machine and feedback to the speaker.

The method may comprise a step of measuring or detecting during said performance non voice related physiological parameters of said speaker during said performance, such as number and/or frequency of respirations, hearth rate, level of adrenaline, an/or amount of sweat. Those parameters may be measured with sensors, such as sensors within a smartwatch or dedicated sensors. The occurrence or number of occurrence or frequency or intensity of the physiological parameters can be used to give feedback to said user and/or to determine his level of stress, his emotions and/or his credibility.

The non-voice related physiological parameters may be measured separately for different said segments. The method may comprise a step of correlating said parameters with said segment.

The method may comprise a step of measuring or detecting during said performance the speaking speed and giving a feedback to the user on that speed. The feedback may be given as a number of words per unit of time for example.

Advantageously, an expected speed is computed in advance. This expected speed may be determined from the input text. The expected speed may depend on an expected duration of the speech, such as a duration introduced in advance by the speaker if the speaker is requested or wants to give his speech during a given duration. A variable speed may be determined in advance. In one embodiment, a specific speed is determined before the performance for each or some predefined segment of the performance, such as the previously mentioned segments corresponding to linguistic constructions. Some type of linguistic constructions require a given range of speed. For example, some types of questions request a break after the question, or sometime before and after the question.

The method may comprise a step of indicating to the speaker the expected speed for each said segment, for example with a markup in the text. This expected speed may depend on the linguistic construction and/or on the semantic signification of the segment. For example, one usually expects from a furious speaker to speak faster and at a higher pitch.

The expected speed may depend on the expected duration of the whole text.

The method may comprise a step of indicating to the speaker if he is in advance or late compared to the expected speed for the whole text and/or for each said segment.

The method may comprise a step of displaying said marked-up version of the text to said speaker during said performance, in synchronization with said performance. The mark up in the text are useful for the speaker when giving his presentation.

Some mark-ups may be displayed as text, such HTML or XML-like tags, or remarks.

Some mark-ups may be displayed as graphic elements, such as icons or colors or highlights or visual symbols.

The method may comprise an analysis of paraverbal audio components of the recorded audio portion. The paraverbal components may include silences, breaks, hesitations ("hum", "huh" etc). The paraverbal components may be used for determining the credibility of a speaker-

The method may comprise analyzing a video portion of said segments. The analysis of the video portion may include an analysis of the body and/or face expressions of the speaker. The analysis may include an analysis of the match between the body and/or face expressions of the speaker of the speaker during each predefined segment corresponding to one linguistic construction, and the type and/or semantic content of said linguistic expression.

The method may comprise a detection of emotions of said speaker from said audio and/or video portions. The emotions may be determined independently for each or some predefined segments. The analysis may comprise a verification of a match between the detected emotion and the linguistic construction. The detection of emotion may be based on a machine learning system, such as a supervised machine learning system, to which the audio and/or video portion is input.

The method may comprise a detection of the gaze direction of the speaker during each or some of said segments. The method may comprise verifying if the speaker looks at his audience during said segments.

The method may comprise a step of simulating an audience during training of a speech. The simulated audience may be displayed to the speaker on a screen or preferably with smart glasses, possibly in a virtual reality environment or a metaverse. Reactions of the simulated audience may be adapted to the performance of the speaker, so as to give him a feedback of his performance. People in the audience may, for example, clap to show their enthusiasm, or on the contrary show signs of weariness, leave, or exchange glances or expressions to the speaker. The reactions of the virtual audience can be generated by a learning machine trained with the reactions of real people during presentations.

The method may comprise giving a feedback to a speaker during his speech in the form of vibrations or sounds transmitted directly to the speaker's cranium during his speech, using for example a bone conduction headset, and therefore audible to the speaker but not to those around him.

The method may comprise a step of computing a value representative of the credibility of said during said segments. This value of credibility may depend on a match between the linguistic construction and the intonation, and/or on a match between the linguistic construction and the body or face language of said speaker during said linguistic construction.

The method may comprise a step of computing a score representative of the performativity of said text depending on the number of occurrences or cadence of linguistic constructions of different types.

The predefined linguistic constructions may include questions. The method may comprise a step of detecting the type of question.

The method may comprise a step of computing an evaluation of said performance. This evaluation may be based on a score for the dramaturgical quality of the text and on a score of the actual speech rendering performance on said text.

The score for the dramaturgical quality of the text may depend on the number or cadence of said linguistical constructions.

The score of the actual performance may depend on the actual performance of each said linguistic construction and on a match between said performance and the type or semantic content of said linguistic construction.

The method may be performed with texts in different languages. The language of the text may be detected automatically, from the written text,

The evaluation of the speech rendering performance may be multimodal, i.e., based not only on the audio recording, but also on the video recording of the speech, so as to consider face language, body language expressions of the speaker during those segments.

The method may be performed by a computer program executed on a computing device or system.

The computing device or system may include a smartphone, a personal computer, a headset, a tablet, a smartwatch, connected glasses etc, or any combination of those devices with a remote computer or server.

Such a computing device can be used to give a feedback to the speaker during training or during his performance.

The invention is also related to a computer product storing a computer program arranged for causing a computing system to:
let a user input a text;
use a machine learning system to detect occurrences of different types of predefined linguistic constructions within said text;
prepare and save a marked-up version of the text, said marked-up version including markups for marking the beginning and end of such linguistic constructions;
record a performance of a speaker speaking said text;
detect segments of said performance corresponding to said linguistic constructions;
analyze at least the audio content of said segments, wherein analyzing comprises evaluating the speech rendering performance of said segments;
give a feedback to said speaker during his performance, so as to allow him to improve the speech performance.

### Short description of the figures

Some embodiments of the invention are illustrated in the figures that show:
- Figure 1 is a flowchart illustrating some possible steps of the method.
- Figure 2 illustrates an input text before mark-up.
- Figure 3A and 3B each illustrate a marked-up text.
- Figure 4 illustrates a possible system for inputting and marking up texts.
- Figure 5 illustrates a possible system for recording and scoring presentations.
- Figure 6 illustrates a flow chart of other aspects of a method used for the invention.
- Figure 7 illustrates a text recognized from a speaker's performance, with markups.

### Detailled description

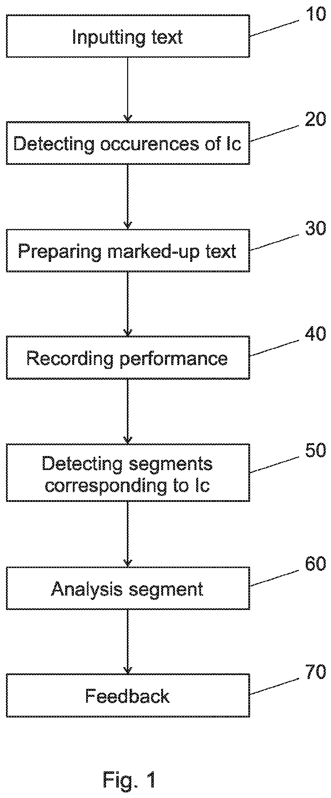

Figure 1 illustrates some steps of a possible method according to the invention.

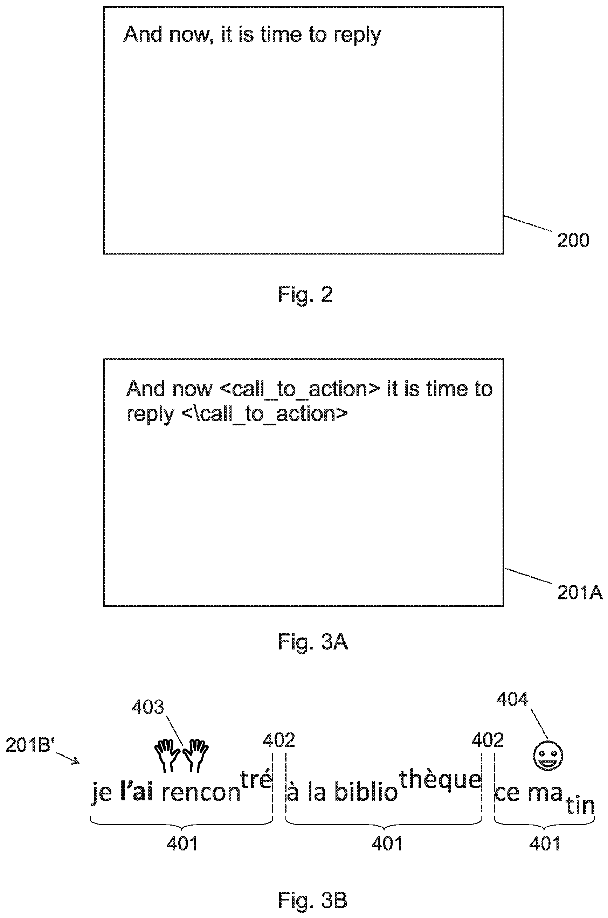

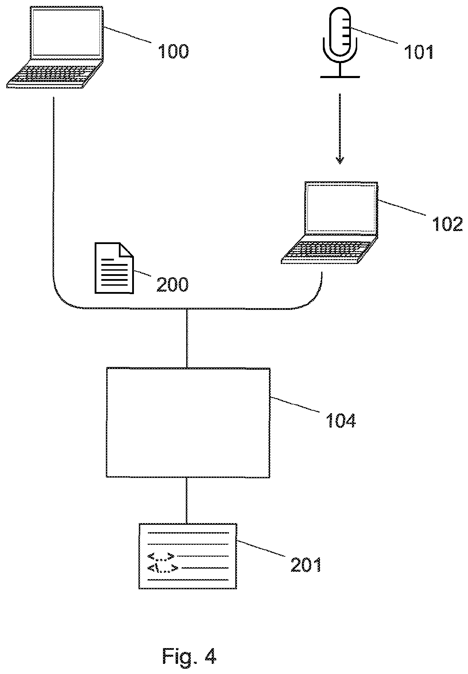

In step 10, a text 200 to be spoken is entered into a computing system. An example of such an inputted text 200 is shown in Figure 2. For example, the text may be typed into a word processing system 100 (Figure 4), downloaded from a server, or obtained by recording a speaker with a microphone 101 and using a speech recognition software module on a computer 102. The text is preferably a prepared text, such as a speech or actor's lines, but the method could also be used with a spontaneous or semi-spontaneous exchange.

In one embodiment, a user may enter a context for the whole text, or various contexts for various portions of the text. The context may indicate the type of text (political speech, sales speech, celebration, etc) and the tone (martial humorous, etc). The context may be selected among a list of predefined contexts. The context may be determined automatically by the computing system, for example based on a semantic analysis of the input text. The context can be used by the later described performance analysis module, to check if the performance of the speaker matches the expected context.

In one embodiment, a user may enter a duration for the performance of the whole text, or for various potions of the text. The expected duration may also be determined automatically by the computing system, based on the number of words, language of the text. A duration entered by the user may be compared with a computed duration, and a notification given to the user in case of discrepancies.

In step 20, the text is analyzed by the computing system 104 to detect occurrences in the text of predefined linguistic constructions. The computing system can include, for example, a computer, the cloud, a smartphone, smart glasses, a smart watch, a headset, a bone conduction headset, or any combination between such systems. The analysis may be performed by the device 100, 102 of the computing system into which the text was entered, by a different computer, or by a remote server.

The detection can include a semantic analysis of the inputted text 200. The detection can implement a classifier, for example a machine learning based classifier, such as a supervised machine learning system, to detect one or more occurrences in the text of linguistic constructions and to classify the linguistic constructions in one or several types.

The predefined linguistic constructions to be identified may include, for example:
- Calls to action
- Questions of various types, including rhetorical questions
- Lists or enumerations
- Rhythmic groups
- Rhetorical devices
- etc.

It has been found that such linguistic constructions are important for the credibility of any speech. Focusing the analysis of the performance of a speaker on those linguistic constructions, rather than on the whole speech, is thus a more efficient way of using the available processing power for scoring the performance of the speaker in real time.

In step 30, a marked-up version 201 of the text is automatically prepared with a processor of the computing system. A first example of such a marked-up text 201A is illustrated on Figure 3A.Another example of such a marked-up text 201B is illustrated on Figure 3B.

The marked version includes tags to indicate the portions of the text that correspond to the linguistic constructions previously identified, and to indicate the type of construction found. Other mark-ups, not necessarily related to linguistic performance, may also be added to help the speaker during training or performance.

In the example of Figure 3A, the tags are entered in HTML or XML format. A start tag can for example mark the beginning of a linguistic construction and an end tag the end of this construction. In this example the portion of the sentence "it is time to reply", identified as a linguistic construction of the type "call to action", is marked with a start tag <call_to_action> and with an end tag <\call_to_action>.

Marking a text with HTML or XML tags is useful for machine processing of the tagged text, for example for the analysis of the performance. HTML and XML texts can be read and understood by humans, but are less convenient than other types of tags.

In the example of Figure 3B, other types of tags that are easier to read by humans are used.

Some tags are entered as typographical changes to the text, as icons 403 and with vertical lines 402 to mark recommended pauses. The French sentence « je I'ai rencontré à la bibliothèque ce matin » is divided into three rhythmic groups 401, i.e., « je I'ai rencontré », « à la bibliothèque » and « ce matin ». The letters « I'ai » in the first rhythmic group are written in bold letters to indicate the intonation. The end of the two first rhythmic groups "tré" and "thèque" are written in superscript to indicate the rising tone, while the end of the last rhythmic group "tin" is written in underscore to indicate the falling tone. In addition, icons 203 are added to the first rhythmic group and to the last rhythmic group to indicate a recommended body language (here: open your arms) and a recommended expression (joy) respectively. Recommended pauses between each rhythmic group are marked with vertical lines 402, with the space between the lines indicating the recommended duration.

Other typographical adjustments might be added to mark specific linguistic constructions.

The tags may also be entered as prompts for the speaker, as notes next to the text, as stage directions, etc, associated with the detected linguistic constructions.

A tagged text can include several mark-ups of different types.

At least some linguistic constructions are recommended as such and marked with tags. But not all typographical adjustments and not all tags are associated with linguistic constructions. As in the example of Figure 3B, some tags are related to recommended intonations, emotions, face gesture, body language etc, not necessarily related to linguistic constructions.

As an example, following tags may be added to a marked-up text:
- Specific linguistic constructions, such as "calls to action"
- Intonative prosodic value : to indicate a specific intonation to give to a portion of the text
- Rhythmic group : to indicate a specific rhythmic group, such as associated words
- Quality of impact
- Emotions or feelings : to mark a portion of a text to associate with a specific emotion or feeling.
- Hand gestures : for example to suggest a specific hand gesture
- Body position: for example to suggest a specific body position.

The marked-up text is saved in a memory of the computing system 104. It can be displayed or printed to help the speaker practice saying the text considering the identified linguistic constructions. When displayed, the tags added to the text can be displayed as they are, or replaced by textual or graphical elements to indicate more clearly to the speaker the desired intonation. For example, a mark-up can be displayed with a symbol asking the speaker to pause and then speak loudly.

A score may be computed that depends on the number of occurrences of linguistic constructions of different types and represent the performativity of the text, i.e., its intrinsic qualities for a good speech.

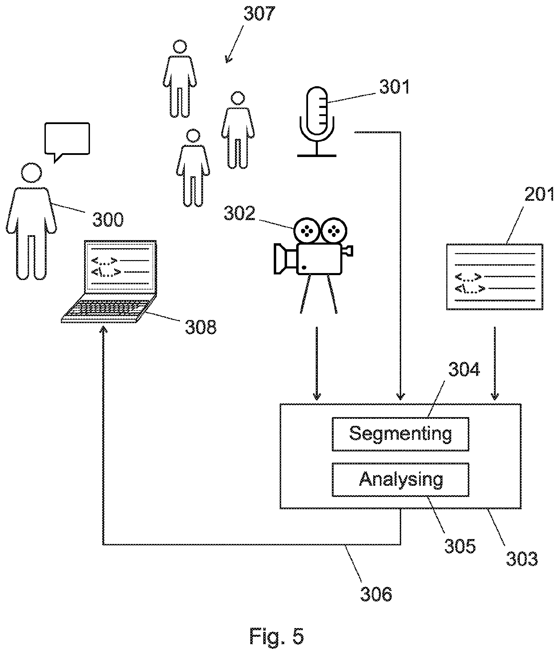

Following steps of Figure 1 may be performed with the system illustrated on Figure 5. In step 40, the speaker 300 practices his or her performance, or performs his or her performance with an audience 307, which is recorded with a microphone 301 as an audio signal and preferably with a camera 302 as a video. The microphone and/or camera may be part of a computing system 303 such as a smartphone, a computer, etc.

The marked-up version 201 of the text may be presented to the speaker during his performance. For example, the marked-up version of the text may be prompted to the speaker by a computer or smartphone 308. The method may include displaying the markups as text and/or as graphic elements, such as icons or colors or typographical adjustments or visual symbols.

The recorded audio and/or video file is saved and analyzed in real time by the computing system 303, during the performance. The computing system 303 may be the system 300 also used by the speaker to read his text, or a different computing system. This analysis is performed considering the marked-up text, for improved efficiency.

The computing system 303 used for this analysis can include, for example, a computer, the cloud, a smartphone, smart glasses, a smart watch, a headset, or any combination between such systems. The analysis may be performed by the device 100, 102 of the computing system into which the text was entered, by a different computer, or by a remote server.

In step 50, this analysis includes a detection of the segments of the audio and/or video recording that correspond to the various linguistic constructions previously identified and marked as such in the marked-up text 201. This detection may be performed by a segmenting module 304 of the processing system 303. It may include a conversion of the audio recording to text, and a comparison of the recognized text with the marked-up text. This conversion is made more reliable, faster and requires less computer resources because it is based on the previously computed marked-up text 201 which can be used to allow to remove ambiguities when a spoken word is difficult to recognize. It is also possible to recognize only previously identified linguistic constructions and to dispense with saving the conversion to text of other portions of the recording. Moreover, the video recording can also be used to facilitate the detection of those segments corresponding to linguistic constructions, especially when the diction of these segments is associated with a predetermined facial or body expression.

Those identified segments of the audio and/or video recording may be marked with metadata, and/or saved separately.

In step 60, an analysis module of the computing system 303 performs an analysis of the speech rendering performance, including at least the audio content, and preferably of the video content, of at least some of those identified segments.

This analysis may comprise an evaluation audio rendering performance of the speech, including preferably an analysis of the prosody and/or intonation of the speaker when he/she speaks the segments. The analysis may also comprise a step of verifying if the recommendations to the speaker, as indicated in the marked up text 201, have been followed.

This analysis of the speech rendering performance may comprise analyzing paraverbal components of the audio portion.

This analysis of the speech rendering performance may comprise analyzing a video portion of said segments, for example an analysis of the body and/or face expressions of said speaker during said segments.

This analysis may comprise analyzing emotions from the video and/or audio content of each segment. The computing system preferably uses a machine learning system for detecting and classifying emotions from said audio and/or video portions. The machine learning system may for example retrieve from the facial expressions of the speaker expressions such as sadness, happiness, surprise, anger, disgust, fear etc, and determines if those expressions match the previously identified linguistic constructions and other recommendations for the speaker.

The analysis is preferably done independently for each segment and may thus result of an independent evaluation of the performance of the speaker during each segment or for each type of linguistic construction.

The computing system can evaluate the quality of the speech rendering performance (such as prosody or intonation or body language or face language and/or paraverbal elements) during each predefined segment, and/or for the whole performance.

The computing system 303 preferably also evaluates the quality of a match between those parameters of the analysis and the type or semantic content of each previously identified linguistic construction. For example, a speaker whose audio and/or video content includes perturbations, hesitations or excitement during a solemn call to actions will receive a poor evaluation of his speech rendering performance, as will a speaker expressing joy during a sad portion of a text. The evaluation is thus dependent on the previously identified type of linguistic construction, and not only on the performance as such.

The computing system 303 preferably also evaluates the match between the previously entered or computed context of the speech, or of the portion of text including the currently evaluated linguistic construction, and recorded audio or video segment.

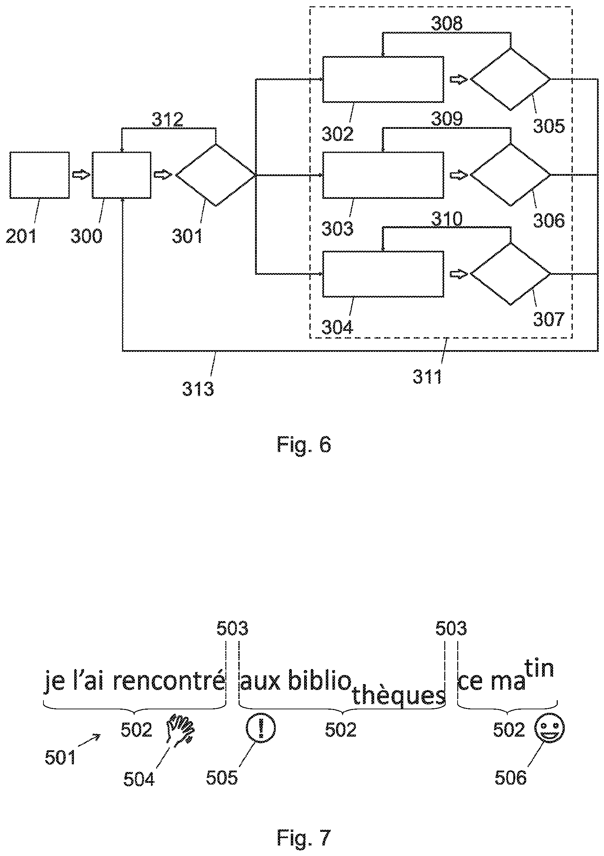

Figure 7 illustrates a feedback that might be given to a speaker during or after his performance or training session. The feedback is given in this example as another annotated text 501 that may be displayed next to the previously marked-up text 201, for easier comparison. The text 501 may be generated with a speech recognition module, and annotated after its analysis. In the example, the annotated text 501 includes three recognized rhythmic groups 5101, here separated by two pauses 503 marked with vertical lines, wherein the distance between the lines indicates the duration of the recorded pause.

A first icon 504 indicates a recognised body language gesture, here a gesture with a single hand (not exactly matching the recommended gesture in the marked-up text 201). A second icon 505 indicates a likely error (the speaker saying "aux bibliothèques" instead of "à la bibliothèque"). A third icon 506 indicates a recognised emotion, here matching the recommended emotion.

The comparison between the marked-up text 201 and the marked-up recognised text 501 is useful especially for training the performance, allowing the speaker to quickly note where he could improve his performance.

A score may be computed and displayed for indicating a match between the marked-up text 201 and the actual performance.

The computing system 303 preferably uses a classifier, preferably based on a machine learning system, such as a supervised machine learning system, for computing this match between those parameters and each predefined segment of the audio and/or video recording. The machine learning system could be trained with a corpus of qualitative speech consent (such as, for example, a collection of TEDx conferences video recordings) and learn how to render speech to match a given context,

The evaluation of the speech rendering performance of the speaker during each predefined segment may be speaker independent. In this case, different speaker hypothetically producing the same audio and video recording of a segment will receive the exact same evaluation. In a preferred embodiment, this evaluation is speaker dependent. In that case, the evaluation will depend on the features of the voice and/or body or face language of each speaker. For example, while a call-to-action in a text with a martial context may require a deep voice, not the same deepness will be required from a man or from a woman with a usually higher voice. The supervised machine learning system used for the evaluation of each segment of a speech can thus be trained for each speaker.

The evaluation of the speech rendering performance may include determining a score representative of the credibility of the speaker during each segment. A classifying system, such as a machine learning system, may be used for determining this credibility. The classifying system may receive or compute variable metrics such as the number or frequency of perturbations, hesitations, paraverbal components, breaks, respirations, and consider the intonation and height of the voice, to determine this credibility score. Those metrics could be measured for the whole speech, and/or separately for each segment corresponding to a linguistic construction. This metric could be displayed to the speaker or used to give him some recommendations or a global score of his performance.

The credibility value may also depend on a match between the linguistic construction and the intonation and on the body or face language of said speaker during said linguistic construction. The credibility may further depend on the variability of the voice speed during a given time interval: a speaker who speaks always at the same speed tends to be monotonous, and/or less credible.

The method may include detecting if the speaker looks at his audience during said segments, and/or at which part of his audience he is looking. A bad score may be attributed to a speaker who does not look at his audience during a predefined segment, or if a speaker too often looks at the same person in his audience. The gaze direction may be determined from the video content of the recording.

In addition to the audio and/or video portion of the recording, the method may use physiological sensors (not shown) for measuring or detecting during said performance non voice related physiological parameters of said speaker during said performance. The occurrence or number of occurrence or frequency or intensity of those physiological parameters may be displayed to the speaker during his performance, and/or used by the computing system 303 to determine his level of stress, his emotions and/or his credibility.

The physiological parameters may include respirations, hearth rate, level of adrenaline, an/or sweat. Those non voice related physiological parameters are measured separately for different said segments; in that case, the method may comprise correlating said parameters with the type of linguistic construction associated with each segment.

The method may also record and analyze reactions from the audience 307 while the speaker300 is performing his speech. The reactions may be retrieved from an audio recording of the audience, for example with one or a plurality of microphones (not shown) directed to the audience. Other reactions may be retrieved from a video of the audience, for example captured with one or a plurality of cameras (not shown) directed to the audience, or captured with a webcam in case of an online speech. Reactions to be detected and analyzed may include for example questions, body and/or face language of the audience. In one embodiment, the reaction includes detecting if the audience is watching at the speaker during previously identified important segments or other crucial moments, and/or if the audience reacts to those segments with questions, applause, or otherwise. A feedback or recommendations may be given to the speaker in real time. In one embodiment, this feedback from the audience may be entered, with other metrics, in a machine learning system to give in real time a recommendation to the speaker, for example : "speak slowly", "make a break", "watch your audience", "control your respiration", etc.

The method may include an evaluation of the speech rendering performance of the speaker 300. The evaluation may be based on one hand on a score for the dramaturgical quality of the text and on the other hand on a score of the actual performance on said text. The score for the dramaturgical quality of the text may depend on the sequence of said linguistical constructions. The score of the actual performance may depend on the actual performance of each said linguistic construction and on a match between said performance and the type or semantic content of said linguistic construction. A different performance index may be computed for each predefined segment corresponding to a linguistic construction, allowing the speaker to train more efficiently those important portions of his speech.

A feedback 306 is given to the speaker in real time during his performance at step 70. The feedback may indicate his performance score, his credibility, and/or specific values such a number of hesitations etc. The feedback may also indicate to the speaker of to improve, for example with prompts such as "speak louder", "slower" etc. This feedback may be presented on the computing device 300 used for his performance, for example on his smartphone, personal computer etc, and/or on a different device of this computing system, for example on his smart glasses, smartwatch, smartphone etc. Advantageously, the feedback is spoken to the speaker but cannot be heard by the audience. The feedback is given in real time during the performance, and adapted to each type of linguistic construction previously identified.

The method of the invention may be used to practice saying a speech and to improve both the text of the speech, its vocal rendition (for example to make it expressive, intelligible, adapted to the text) and practice the face and body language.

The method of the invention may be implemented with a software executed on a user device, for example a smartphone, a tablet, a personal computer etc. The personal device may propose some training exercises to the user, adapted to different performance scores of the speaker during training.

Figure 6 illustrates a flow chart of other aspects of a method used for the invention, notably for training the performance of a text such as speech to be trained. A marked-up text 201, for example a text entered by the speaker, is displayed, read and spoken by a speaker during a performance or training at step 300. The performance may be recorded, for example with a smartphone or any other audio and/or video capture device. A global performance score is computed with a computer program, such as an app, at step 301, and feedback to the speaker. A previously explained, this global score is preferably based at least on an analysis of at least the audio content of said segments, wherein analyzing comprises evaluating the speech rendering performance of segments corresponding to predefined linguistic constructions indicated in the marked-up text. The feedback to the user may be rendered as a mark, as a text, as a virtual audience reaction, or in other suitable ways. The speaker may decide to repeat the training and speak the text one more time (arrow 312).

In addition to the overall score calculated and displayed during step 301, the computer program can also invite the speaker to improve certain aspects of his performance by means of exercises and calculation of scores on different aspects of his performance (block 311).

For example, to improve the written text (block 302), a score indicating the quality of this text, based in particular on the number of predefined linguistic constructions detected, is displayed during step 305, in order to allow the speaker to improve this text (arrow 308). Tips and exercises for improving expressiveness can be offered to the speaker for this purpose.

The speaker may also be prompted to improve other aspects of his audio or video performance. For example, block 303 corresponds to an analysis of the speaker's expressiveness during segments corresponding to predefined linguistic constructions. This expressiveness may be determined by a learning machine, for example, from the intonations or prosody of the speaker during these segments, and/or from his facial or body language. An expressiveness score can be displayed during step 306, to give the speaker the opportunity to practice improving this aspect (arrow 309). Tips and exercises for improving expressiveness can be provided.

Block 304 corresponds to an analysis of the speaker's intelligibility during segments corresponding to predefined linguistic constructions. This intelligibility can be determined for example by a learning machine from the speaker's language perturbations during these segments, and/or from his facial or body language which can also contribute to the intelligibility. An intelligibility score can be displayed in step 307, to give the speaker the opportunity to practice improving this aspect (arrow 310). Intelligibility improvement exercises can be offered to the speaker for this purpose.

After practicing particular aspects (written text, expressiveness, intelligibility, etc.), the speaker may be asked to repeat the entire text to see if the overall score is improved (arrow 313).

### Additional Features and Terminology

As used herein, the term "computing system," in addition to having its ordinary meaning, can refer to a device or set of interconnected devices that may process executable instructions to perform operations or may be configured after manufacturing to perform different operations responsive to processing the same inputs to the component.

Many other variations than those described herein will be apparent from this disclosure. For example, depending on the embodiment, certain acts, events, or functions of any of the algorithms described herein can be performed in a different sequence, can be added, merged, or left out altogether (for example, not all described acts or events are necessary for the practice of the algorithms). Moreover, in certain embodiments, acts or events can be performed concurrently, for instance, through multi-threaded processing, interrupt processing, or multiple processors or processor cores or on other parallel architectures, rather than sequentially. In addition, different tasks or processes can be performed by different machines or computing systems that can function together.

Unless otherwise specified, the various illustrative logical blocks, modules, and algorithm steps described herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Unless otherwise specified, the various illustrative logical blocks and modules described in connection with the embodiments disclosed herein can be implemented or performed by a machine, a microprocessor, a state machine, a digital signal processor (DSP), an application specific integrated circuit (ASIC), a FPGA, or other programmable logic device, discrete gate or transistor logic, discrete hardware components, or any combination thereof designed to perform the functions described herein. A hardware processor can include electrical circuitry or digital logic circuitry configured to process computer-executable instructions. In another embodiment, a processor includes an FPGA or other programmable device that performs logic operations without processing computer-executable instructions. A processor can also be implemented as a combination of computing devices, e.g., a combination of a DSP and a microprocessor, a plurality of microprocessors, one or more microprocessors in conjunction with a DSP core, or any other such configuration. A computing environment can include any type of computer system, including, but not limited to, a computer system based on a microprocessor, a mainframe computer, a digital signal processor, a portable computing device, a device controller, or a computational engine within an appliance, to name a few.

Unless otherwise specified, the steps of a method, process, or algorithm described in connection with the embodiments disclosed herein can be embodied directly in hardware, in a software module stored in one or more memory devices and executed by one or more processors, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium, media, or physical computer storage known in the art. An example storage medium can be coupled to the processor such that the processor can read information from, and write information to, the storage medium. In the alternative, the storage medium can be integral to the processor. The storage medium can be volatile or non-volatile. The processor and the storage medium can reside in an ASIC.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements or states. Thus, such conditional language is not generally intended to imply that features, elements or states are in any way required for one or more embodiments or that one or more embodiments necessarily include logic for deciding, with or without author input or prompting, whether these features, elements or states are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. Further, the term "each," as used herein, in addition to having its ordinary meaning, can mean any subset of a set of elements to which the term "each" is applied.

## Claims

1. A computing device implemented method for assisting a speaker (300) during training or actual performance of a speech, comprising the steps of:
(10) inputting a text (200) to be spoken;
(20) using a machine learning system to detect occurrences of different types of predefined linguistic constructions within said text;
(30) having a processor preparing and saving a marked-up version (201) of the text, said marked-up version including markups for marking such linguistic constructions;
(40) recording a performance of a speaker speaking said text;
(50) detecting segments of said performance corresponding to said linguistic constructions;
(60) analyzing at least the audio content of said segments, wherein analyzing comprises evaluating the speech rendering performance of said segments;
(70) giving a feedback (501) to said speaker during or after his performance, so as to allow him to improve the speech rendering performance of said segments.

2. The method of claim 1, wherein said markups mark the beginning and end of said linguistic constructions.

3. The method of one of the claims 1 or 2, further comprising a step of measuring or detecting during said performance non voice related physiological parameters of said speaker during said performance, and using the occurrence or number of occurrence or frequency or intensity of said physiological parameters to give a feedback to said user and/or to determine his level of stress, his emotions and/or his credibility.

4. The method of claim 3, said physiological parameters including respirations, hearth rate, level of adrenaline, an/or sweat.

5. The method of one of the claims 3 to 4, wherein said non voice related physiological parameters are measured separately for different said segments, the method comprising a step of correlating said parameters with said segment.

6. The method of one of the claims 1 to 5, comprising a step of displaying said marked-up version (201) of the text to said speaker during said performance.

7. The method of one of the claims 1 to 6, wherein analyzing includes analyzing paraverbal components of said audio portion.

8. The method of one of the claims 1 to 7, further comprising analyzing a video portion of said segments, wherein the analysis of the video content includes analyzing the body and/or face expressions of said speaker.

9. The method of one of the claims 1 to 8, wherein analyzing comprises using a machine learning system for detecting emotions from said audio and/or video portions.

10. The method of claim 9, further comprising computing a score representative of a match between said detected emotions and the linguistic constructions.

11. The method of one of the claims 1 to 10, comprising a step of entering a context associated with said input text or with said segment, and using a machine learning system for verifying if the performance of the speaker matches said context.

12. The method of one of the claims 1 to 11, comprising detecting if the speaker looks at his audience during said segments.

13. The method of one of the claims 1 to 12, further comprising computing a value representative of the credibility of said during said segments, said value of credibility depending on a match between at least one linguistic construction and the intonation and on the body or face language of said speaker during said linguistic construction.

14. The method of one of the claims 1 to 13, further comprising computing a score depending on the number of occurrences of linguistic constructions of different types and computing a score representative of the performativity of said text.

15. The method of one of the claims 1 to 14, said linguistic constructions comprising questions, said method comprising a step of detecting the type of question.

16. The method of one of the claims 1 to 15, comprising a step of computing an evaluation of said performance, said evaluation being based on a score for the dramaturgical quality of the text and on a score of the actual performance on said text, said score for the dramaturgical quality of the text depending on the sequence of said linguistical constructions, said score of the actual performance depending on the actual performance of each said linguistic construction and on a match between said performance and the type or semantic content of said linguistic construction.

17. The method of one of the claims 1 to 16, wherein the evaluation of the performance of the speaker during each predefined segment is performed using a speaker dependent classifying system.

18. The method of one of the claims 1 to 17, wherein said marked-up version including markups for marking recommended intonation, hand gestures, and/or body position.

19. The method of one of the claims 1 to 18, wherein said feedback is given as a tagged text (501).

20. A computer product storing a computer program arranged for causing a computing system to:
let a user input a text;
use a machine learning system to detect occurrences of different types of predefined linguistic constructions within said text;
prepare and save a marked-up version of the text, said marked-up version including markups for marking the beginning and end of such linguistic constructions;
record a performance of a speaker speaking said text;
detect segments of said performance corresponding to said linguistic constructions;
analyze at least the audio content of said segments, wherein analyzing comprises evaluating the prosody and/or intonation of said segments;
give a feedback to said speaker during his performance, so as to allow him to improve the prosody and/or intonation of said linguistic constructions.

## Patentansprüche

1. In einer Computervorrichtung implementiertes Verfahren zum Unterstützen eines Redners (300) während eines Trainings oder einer tatsächlichen Durchführung einer Rede, wobei das Verfahren die folgenden Schritte umfasst:
(10) Eingeben eines zu sprechenden Textes (200);
(20) Verwenden eines Maschinenlernsystems zum Erkennen eines Vorkommens von verschiedenen Arten von vordefinierten linguistischen Konstruktionen innerhalb des Textes;
(30) Veranlassen eines Prozessors zum Vorbereiten und Speichern einer markierten Version (201) des Textes, wobei die markierte Version Markierungen zum Markieren von derartigen linguistischen Konstruktionen beinhaltet;
(40) Aufzeichnen einer Durchführung durch einen Redner, der den Text spricht;
(50) Erkennen von Segmenten der Durchführung, die den linguistischen Konstruktionen entsprechen;
(60) Analysieren von mindestens dem Audioinhalt der Segmente, wobei das Analysieren ein Beurteilen der Durchführung der Sprachwiedergabe der Segmente umfasst;
(70) Geben einer Rückmeldung (501) an den Redner während oder nach seiner Durchführung, um ihm zu erlauben, die Durchführung der Sprachwiedergabe der Segmente zu verbessern.

2. Verfahren nach Anspruch 1, wobei die Markierungen den Anfang und das Ende der linguistischen Konstruktionen markieren.

3. Verfahren nach einem der Ansprüche 1 oder 2, das ferner während der Durchführung einen Schritt eines Messens oder eines Erkennens von nicht sprachbezogenen physiologischen Parametern des Redners während der Durchführung, und eines Verwendens des Vorkommens oder der Anzahl des Vorkommens oder der Häufigkeit oder Intensität der physiologischen Parameter umfasst, um dem Benutzer eine Rückmeldung zu geben und/oder um sein Stressniveau, seine Emotionen und/oder seine Glaubwürdigkeit zu ermitteln.

4. Verfahren nach Anspruch 3, wobei die physiologischen Parameter Atmungen, eine Herzfrequenz, einen Adrenalinspiegel und/oder Schweiß beinhalten.

5. Verfahren nach einem der Ansprüche 3 bis 4, wobei die nicht sprachbezogenen physiologischen Parameter separat für verschiedene der Segmente gemessen werden, wobei das Verfahren einen Schritt eines Korrelierens der Parameter mit dem Segment umfasst.

6. Verfahren nach einem der Ansprüche 1 bis 5, das einen Schritt eines Anzeigens der markierten Version (201) des Textes für den Redner während der Durchführung umfasst.

7. Verfahren nach einem der Ansprüche 1 bis 6, wobei das Analysieren ein Analysieren von paraverbalen Komponenten des Audioabschnitts beinhaltet.

8. Verfahren nach einem der Ansprüche 1 bis 7, das ferner ein Analysieren eines Videoabschnitts der Segmente umfasst, wobei die Analyse des Videoinhalts ein Analysieren der Körpersprache und/oder der Gesichtsausdrücke des Redners umfasst.

9. Verfahren nach einem der Ansprüche 1 bis 8, wobei das Analysieren ein Verwenden eines Maschinenlernsystems zum Erkennen von Emotionen aus den Audio- und/oder Videoabschnitten umfasst.

10. Verfahren nach Anspruch 9, das ferner ein Berechnen einer Bewertungszahl umfasst, die eine Übereinstimmung zwischen den erkannten Emotionen und den linguistischen Konstruktionen repräsentiert.

11. Verfahren nach einem der Ansprüche 1 bis 10, das einen Schritt eines Eingebens eines Kontexts, der mit dem Eingabetext oder dem Segment assoziiert ist, und ein Verwenden eines Maschinenlernsystems zum Verifizieren umfasst, ob die Durchführung durch den Redner mit dem Kontext übereinstimmt.

12. Verfahren nach einem der Ansprüche 1 bis 11, das ein Erkennen umfasst, ob der Redner während der Segmente auf sein Publikum schaut.

13. Verfahren nach einem der Ansprüche 1 bis 12, das ferner ein Berechnen eines Wertes umfasst, der die Glaubwürdigkeit des während der Segmente Gesagten repräsentiert, wobei der Wert der Glaubwürdigkeit von einer Übereinstimmung zwischen mindestens einer linguistischen Konstruktion und der Betonung und der Körpersprache oder dem Gesichtsausdruck des Redners während der linguistischen Konstruktion abhängig ist.

14. Verfahren nach einem der Ansprüche 1 bis 13, das ferner ein Berechnen einer Bewertungszahl in Abhängigkeit von der Anzahl des Vorkommens von unterschiedlichen Arten von linguistischen Konstruktionen und ein Berechnen einer Bewertungszahl umfasst, die für die Performativität des Textes repräsentativ ist.

15. Verfahren nach einem der Ansprüche 1 bis 14, wobei die linguistischen Konstruktionen Fragen umfassen, wobei das Verfahren einen Schritt eines Erkennens der Art der Frage umfasst.

16. Verfahren nach einem der Ansprüche 1 bis 15, das einen Schritt eines Berechnens einer Beurteilung der Durchführung umfasst, wobei die Beurteilung auf einer Bewertungszahl für die dramaturgische Qualität des Textes und auf einer Bewertungszahl für die tatsächliche Durchführung an dem Text basiert ist, wobei die Bewertungszahl für die dramaturgische Qualität des Textes von der Sequenz der linguistischen Konstruktionen abhängig ist, wobei die Bewertungszahl für die tatsächliche Durchführung von jeder der linguistischen Konstruktionen und von einer Übereinstimmung zwischen der Durchführung und der Art oder dem semantischen Inhalt der linguistischen Konstruktion abhängig ist.

17. Verfahren nach einem der Ansprüche 1 bis 16, wobei die Beurteilung der Durchführung durch den Redner während jedes vordefinierten Segments unter Verwendung eines rednerabhängigen Klassifizierungssystems durchgeführt wird.

18. Verfahren nach einem der Ansprüche 1 bis 17, wobei die markierte Version Markierungen zum Markieren einer empfohlenen Betonung, Handgesten und/oder einer Körperhaltung beinhaltet.

19. Verfahren nach einem der Ansprüche 1 bis 18, wobei die Rückmeldung als ein markierter Text gegeben wird (501).

20. Computerprodukt, in dem ein Computerprogramm gespeichert ist, das geeignet ist, um ein Computersystem zu veranlassen zum:
Veranlassen, dass ein Benutzer einen Text eingibt;
Verwenden eines Maschinenlernsystems zum Erkennen eines Vorkommens von verschiedenen Arten von vordefinierten linguistischen Konstruktionen innerhalb des Textes;
Vorbereiten und Speichern einer markierten Version des Textes, wobei die markierte Version Markierungen zum Markieren des Beginns und des Endes derartiger linguistischer Konstruktionen beinhaltet;
Aufzeichnen einer Durchführung durch einen Redner, der den Text spricht;
Erkennen von Segmenten der Durchführung, die den linguistischen Konstruktionen entsprechen;
Analysieren von mindestens dem Audioinhalt der Segmente, wobei das Analysieren ein Bewerten des Satzrhythmus oder der Betonung der Segmente umfasst;
Geben einer Rückmeldung für den Redner während seiner Durchführung, um ihm zu erlauben, den Satzrhythmus und/oder die Betonung der linguistischen Konstruktionen zu verbessern.

## Revendications

1. Procédé mis en œuvre par un dispositif informatique pour assister un locuteur (300) pendant l'apprentissage ou l'exécution effective d'un discours, le procédé comprenant les étapes suivantes :
(10) entrer un texte (200) à prononcer ;
(20) utiliser un système d'apprentissage automatique pour détecter les occurrences de différents types de constructions linguistiques prédéfinies au sein dudit texte ;
(30) avoir un processeur préparant et sauvegardant une version annotée (201) du texte, ladite version annotée comportant des marquages pour marquer de telles constructions linguistiques ;
(40) enregistrer la performance d'un locuteur énonçant ledit texte ;
(50) détecter des segments de ladite performance correspondant auxdites constructions linguistiques ;
(60) analyser au moins le contenu audio desdits segments, l'analyse comprenant l'évaluation de la performance de restitution vocale desdits segments ;
(70) donner un retour (501) audit locuteur pendant ou après sa performance afin de lui permettre d'améliorer la performance de restitution vocale desdits segments.

2. Procédé selon la revendication 1, dans lequel lesdits marquages marquent le début et la fin desdites constructions linguistiques.

3. Procédé selon l'une des revendications 1 ou 2, comprenant en outre une étape de mesure ou de détection pendant ladite performance des paramètres physiologiques non liés à la voix dudit locuteur pendant ladite performance, et d'utilisation de l'occurrence ou du nombre d'occurrences ou de la fréquence ou de l'intensité desdits paramètres physiologiques pour donner une rétroaction audit utilisateur et/ou pour déterminer son niveau de stress, ses émotions et/ou sa crédibilité.

4. Procédé selon la revendication 3, lesdits paramètres physiologiques comprenant les respirations, la fréquence cardiaque, le niveau d'adrénaline, et/ou la sueur.

5. Procédé selon l'une des revendications 3 à 4, dans lequel lesdits paramètres physiologiques non liés à la voix sont mesurés séparément pour lesdits segments différents, le procédé comprenant une étape de corrélation desdits paramètres avec ledit segment.

6. Procédé selon l'une des revendications 1 à 5, comprenant une étape d'affichage de ladite version annotée (201) du texte à l'attention dudit locuteur pendant ladite exécution.

7. Procédé selon l'une des revendications 1 à 6, dans lequel l'analyse comprend l'analyse de composantes paraverbales de ladite partie audio.

8. Procédé selon l'une des revendications 1 à 7, comprenant en outre l'analyse d'une partie vidéo desdits segments, où l'analyse du contenu vidéo comprend l'analyse des expressions du corps et/ou du visage dudit locuteur.

9. Procédé selon l'une des revendications 1 à 8, dans lequel l'analyse comprend l'utilisation d'un système d'apprentissage automatique pour détecter des émotions à partir desdites parties audio et/ou vidéo.

10. Procédé selon la revendication 9, comprenant en outre le calcul d'un score représentatif d'une correspondance entre lesdites émotions détectées et les constructions linguistiques.

11. Procédé selon l'une des revendications 1 à 10, comprenant une étape d'entrée d'un contexte associé audit texte d'entrée ou audit segment, et l'utilisation d'un système d'apprentissage automatique pour vérifier si la performance du locuteur correspond audit contexte.

12. Procédé selon l'une des revendications 1 à 11, comprenant de détecter si le locuteur regarde son auditoire pendant lesdits segments.

13. Procédé selon l'une des revendications 1 à 12, comprenant en outre de calculer une valeur représentative de la crédibilité dudit locuteur pendant lesdits segments, ladite valeur de crédibilité dépendant d'une correspondance entre au moins une construction linguistique et l'intonation et lu langage corporel ou facial dudit locuteur pendant ladite construction linguistique.

14. Procédé selon l'une des revendications 1 à 13, comprenant en outre de calculer une note en fonction du nombre d'occurrences de constructions linguistiques de différents types et de calculer une note représentative de la performativité dudit texte.

15. Procédé selon l'une des revendications 1 à 14, lesdites constructions linguistiques comprenant des questions, ledit procédé comprenant une étape de détection du type de question.

16. Procédé selon l'une des revendications 1 à 15, comprenant une étape de calcul d'une évaluation de ladite performance, ladite évaluation étant basée sur une note portant sur la qualité dramaturgique du texte et sur une note portant sur la performance réelle dudit texte, ladite note portant sur la qualité dramaturgique du texte dépendant de la séquence desdites constructions linguistiques, ladite note portant sur la performance réelle dépendant de la performance réelle de chacune desdites constructions linguistiques et d'une concordance entre ladite performance et le type ou le contenu sémantique de ladite construction linguistique.

17. Procédé selon l'une des revendications 1 à 16, dans lequel l'évaluation de la performance du locuteur pendant chaque segment prédéfini est effectuée en utilisant un système de classification dépendant du locuteur.

18. Procédé selon l'une des revendications 1 à 17, dans lequel ladite version annotée comprend des marquages pour marquer l'intonation recommandée, les gestes de la main et/ou la position du corps.

19. Procédé selon l'une des revendications 1 à 18, dans lequel ladite rétroaction est donnée sous la forme d'un texte balisé (501).

20. Produit informatique stockant un programme informatique agencé pour amener un système informatique à :
permettre à un utilisateur de rentrer un texte ;
utiliser un système d'apprentissage automatique pour détecter les occurrences de différents types de constructions linguistiques prédéfinies au sein dudit texte ;
préparer et enregistrer une version balisée du texte, ladite version balisée comprenant des balises pour marquer le début et la fin de telles constructions linguistiques ;
enregistrer une performance d'un locuteur énonçant ledit texte ;
détecter des segments de ladite performance correspondant auxdites constructions linguistiques ;
analyser au moins le contenu audio desdits segments, où l'analyse comprend l'évaluation de la prosodie et/ou de l'intonation desdits segments ;
donner un retour audit locuteur lors de sa performance, afin de lui permettre d'améliorer la prosodie et/ou l'intonation desdites constructions linguistiques.
